**Europäisches Patentamt**

**European Patent Office**

**Office européen des brevets**

(19)

(11) Veröffentlichungsnummer : **0 122 678**
**B1**

(12) # EUROPÄISCHE PATENTSCHRIFT

(45) Veröffentlichungstag der Patentschrift :
21.12.88

(21) Anmeldenummer : 84200514.2

(22) Anmeldetag : 10.04.84

(51) Int. Cl.⁴ : **G 11 B  5/455**, G 11 B 23/04,
G 01 L  3/14

(54) **Vorrichtung zur Messung der Stellung wenigstens eines Magnetkopfes in einem Magnetbandkassettengerät gegenüber der Magnetbandtransportbahn.**

(30) Priorität : 14.04.83 DE 3313550

(43) Veröffentlichungstag der Anmeldung :
24.10.84 Patentblatt 84/43

(45) Bekanntmachung des Hinweises auf die Patenterteilung : 21.12.88 Patentblatt 88/51

(84) Benannte Vertragsstaaten :
DE FR GB IT

(56) Entgegenhaltungen :
DE—C— 3 142 685
IBM TECHNICAL DISCLOSURE BULLETIN, Band 20,
Nr. 5, Oktober 1977, Seite 1953, New York, US; L.H.
MILBURN et al.: "Gapmeter"
RADIO FERNSEHEN ELEKTRONIK, Band 29, Nr. 8,
Seiten 534,535, Berlin, DD; W. SIEGEMUND:
"Bandzugmesskassette"
TECHNICAL DIGEST. WESTERN ELECTRIC, Nr. 67,
Juli 1982, Seite 5, New York, US; P.T. DELLA-ROCCO
et al.: "Magnetic head aligning fixture"

(73) Patentinhaber : Philips Patentverwaltung GmbH
Wendenstrasse 35 Postfach 10 51 49
D-2000 Hamburg 1 (DE)
DE ·
N.V. Philips' Gloeilampenfabrieken
Groenewoudseweg 1
NL-5621 BA Eindhoven (NL)
FR GB IT

(72) Erfinder : Döpp, Matthias
Brandoberndorferstrasse 11
D-6331 Waldsolms (DE)
Erfinder : Schmidt, Erhard
Lindenstrasse 25
D-6330 Giessen-Lützelinden (DE)

(74) Vertreter : Kupfermann, Fritz-Joachim, Dipl.-Ing. et al
Philips Patentverwaltung GmbH Wendenstrasse 35
Postfach 10 51 49
D-2000 Hamburg 1 (DE)

EP 0 122 678 B1

## Beschreibung

Die Erfindung bezieht sich auf eine Meßkassette mit elektrischer Meßwertübertragung zur Messung der Stellung wenigstens eines Magnetkopfes in einem Magnetbandkassettengerät gegenüber der Magnetbandtransportbahn, an der das Magnetband bei Spielbetrieb vor dem Magnetkopf vorbeigeführt wird.

Zur Messung der Stellungen von Magnetköpfen innerhalb von Magnetbandkassettengeräten ist es üblich, Lehren einzusetzen, mit denen die Stellung der Magnetköpfe eingestellt wird. Ist ein solches Gerät aber durch Aufmontieren seines Gehäuses bereits geschlossen, dann ist es nicht möglich, die Stellung der Magnetköpfe gegenüber dem Magnetband zu messen.

Aus der Zeitschrift « Funkschau » 1975, Heft 5, Band 47, Seiten 61 bis 63, sind Meßkassetten bekannt, mit denen Funktionsdaten von Magnetbandkassettengeräten meßbar und über elektrische Leitungen an Anzeigegeräte übertragen sind.

Es ist Aufgabe der Erfindung, eine Meßkassette der eingangs erwähnten Art zu schaffen, mit der es möglich ist, die Stellung des Magnetkopfes innerhalb des Magnetbandkassettengerätes zuverlässig und auf einfache Weise zu ermitteln und räumlich unabhängig von der Meßstelle durch Anzeige sichtbar zu machen.

Die gestellte Aufgabe ist erfindungsgemäß gelöst durch wenigstens eine einseitig befestigte, federnde Zunge, mit deren freiem Ende die Stellung des Magnetkopfes in der Bandtransportebene und/oder senkrecht dazu bei eingeschobener Kassette abtastbar und die an wenigstens einer Oberfläche mit einer elektrischen Dehnungsmeßanordnung versehen ist, die von ihr ermittelte Meßwerte über elektrische Übertragungsleitungen an ein Anzeigegerät übermittelt.

Eine solche Meßkassette macht es möglich, die Magnetkopfstellung innerhalb des Laufwerkes sowohl bei entferntem oder auch aufgesetztem Gehäuse zu ermitteln und außerhalb des Gerätes dann zur Anzeige zu bringen.

Federnde Zungen, die mit elektrischen Dehnungsmeßstreifen versehen sind, sind in der älteren DE-PS 31 42 685 beschrieben. Dort werden die Dehnungsmeßstreifen aber eingesetzt, um das Drehmoment an den Wickeldornen eines Kassettengerätes zu ermitteln.

Nach einer weiteren Ausgestaltung der Erfindung ist vorgesehen, daß am freien Ende der federnden Zunge ein Meßfühler angeordnet ist, der von der Kopffläche des Magnetkopfes mit der Zunge senkrecht zu der Bandtransportebene verschiebbar ist. Dieser Aufbau ist besonders einfach, da die federnde Zunge so ausgebildet sein kann, daß sie von sich aus gegen den Magnetkopf federt.

Nach einer weiteren Ausgestaltung der Erfindung ist vorgesehen, daß das freie Ende der federnden Zunge zwischen den Meßvorgängen mittels eines Stellmechanismus in eine berührungslose Mittelstellung zwischen Zinken der zugehörigen Bandführungsgabel stellbar ist, in der die Zunge frei zwischen die Gabelzinken fahrbar ist. Der Stellmechanismus sorgt in diesem Fall dafür, daß die Zunge ihre Meßfunktion nur ausüben kann, wenn die Kassette mit dem Magnetband in das Gerät eingesetzt ist. Außerhalb der Meßvorgänge während des Einschiebens und Herausnehmens wird die Zunge von dem Stellmechanismus so zwischen die Gabelzinken der Bandführungsgabel geschoben, daß weder Stellmechanismus noch das Ein- und Ausfahren der Kassette durch die Gabelzinken behindert werden.

Der Stellmechanismus besteht nach einer weiteren Ausgestaltung der Erfindung aus einer senkrecht zur Bandtransportebene in der Meßkassette verschieblichen Stange, die mittels eines Elektromagneten gegen die Kraft einer Feder zurückziehbar ist und dabei eine Klinke betätigt, die sich während einer Messung an eine Gabelzinke anlegt und zwischen den Messungen von der Gabelzinke weg in den Freiraum zwischen beiden Gabelzinken eingeschwenkt ist, wobei die Klinke die federnd gegen sie drückende Zunge absenkt und anhebt. Dabei sind zwei einen Winkel einschließende, miteinander verbundene Klinkenarme vorgesehen, die um eine ortsfeste Schwenkachse verschwenkbar sind. Der erste Klinkenarm ist gelenkig an die Stange angelenkt.

Die Erfindung wird anhand des in der Zeichnung dargestellten Ausführungsbeispieles näher erläutert. Es zeigen :

Fig. 1 eine Meßkassette mit federnden Zungen, mit denen die Stellung des Magnetkopfes eines Kassettenrecorders in der Bandtransportebene und senkrecht (Eintauchtiefe) dazu abtastbar ist, wobei sich der Magnetkopf außerhalb der Kassette befindet,

Fig. 2 einen Schnitt durch die Meßkassette längs der Linie II-II nach Fig. 1, wobei der Magnetkopf auf die Kassette zu bewegt ist in seine Spielposition,

Fig. 3 bis 5 drei verschiedene vergrößerte Darstellungen des Zusammenspiels von Meßvorrichtung und Tonkopf nach Fig. 2,

Fig. 6 eine Ausführungsform, mit der es möglich ist, die Kopfhöhendifferenz zwischen Tonkopf und Löschkopf mit Hilfe von federnden Zungen zu messen, die zwischen die Gabelzinken der Bandführungsgabeln schiebbar sind.

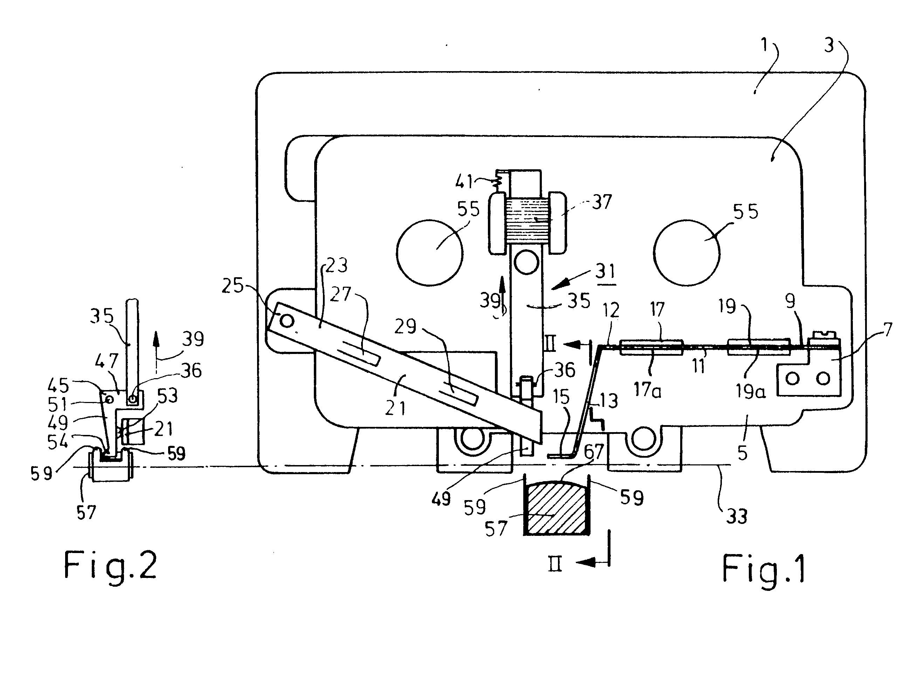

Fig. 1 zeigt den Rahmen 1 eines Kassettengehäuses. In dem Freiraum 3 innerhalb dieses Rahmens ist eine Anzahl von Bauteilen angeordnet. So ist an der rückseitigen Gehäusewand 5 mittels eines Trägers 7 ein Ende 9 einer federnden Zunge 11 befestigt. Die federnde Zunge 11 trägt an dem anderen freien Ende 12 eine Abwinklung 13 mit einem Fühler 15. An der Zunge 11 sind auf beiden Oberflächen Dehnungsmeßstreifen 17, 17a und 19, 19a angeordnet. Die Dehnungsmeßstreifen erstrecken sich, wie eine weitere Zunge 21 auf der linken Seite der Zeichnung zeigt, in Längsrichtung der Zunge 9.

Die Zunge 21 ist ebenso wie die Zunge 9 an einem Ende 23 befestigt bzw. eingespannt. Die Einspannung 25 liegt bei der Zunge 21 beispielsweise im Rahmen 1. Die Zunge 21 ist in Längsrichtung um 90° gegenüber der Zunge 11 versetzt befestigt, so daß sie in der Fig. 1 flächig zu erkennen ist. Auch auf der Zunge 21 sind Dehnungsmeßstreifen 27 und 29 auf der Oberseite und in der gleichen Weise Dehnungsmeßstreifen auf der Unterseite der Zunge 21 befestigt.

Die Zunge 21 wirkt mit einem Stellmechanismus 31 zusammen. Dieser Stellmechanismus besteht aus einer senkrecht zur Transportebene 33 des Magnetbandes in der Meßkassette verschieblichen Stange 35. Diese Stange 35, die aus Weicheisen besteht, wird durch einen Elektromagneten 37 hindurchgeführt und ist von diesem Elektromagneten 37 in Richtung eines Pfeiles 39 bei seinem Erregen anziehbar entgegen der Wirkung einer Zugfeder 41, die bestrebt ist, die Stellstange 35 in Richtung auf die Bandtransportebene zu verschieben. Über eine an der Stellstange 35 vorgesehene Gelenkverbindung 36 ist die Stellstange mit einer doppelarmigen Klinke 45 verbunden, die um eine im Übergang zwischen den Klinkenarmen 47 und 49 vorgesehene ortsfeste Schwenkachse 51 verschwenken kann. Die Klinke 45 ist mit einem Abstandsdorn 53 versehen, gegen den ständig die federnde Zunge 21 drückt. Der Klinkenarm 49 trägt an seinem freien Ende eine Tastspitze 54.

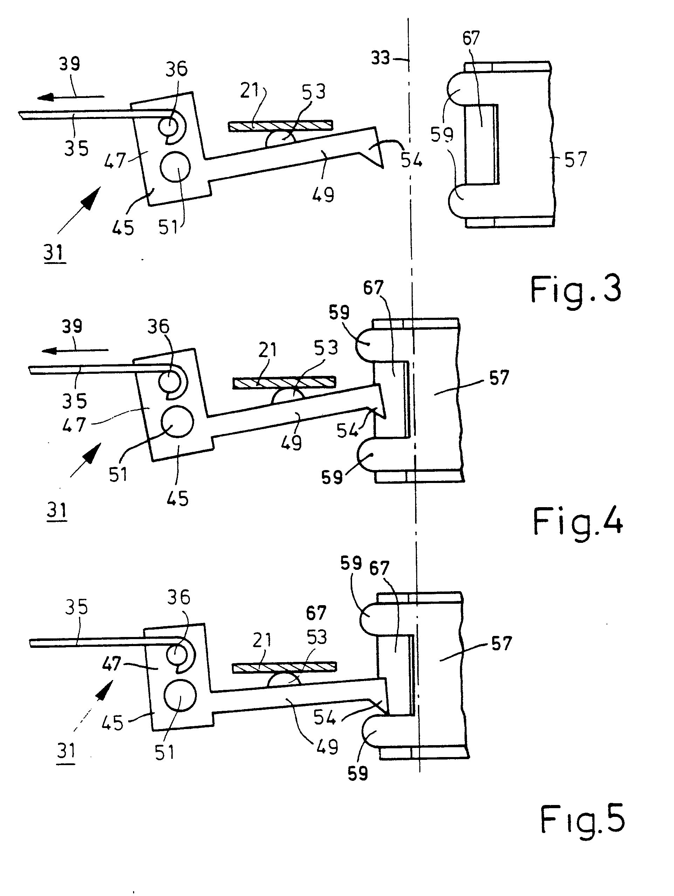

Vor dem Einschieben der Meßkassette in das Gerät, wobei die Wickeldorne durch die Durchbrüche 55 in der Deckelseite 5 hindurchgreifen, befindet sich ein Magnetkopf 57, der an einer nicht dargestellten Kopfplatte des Kassettenrecorders angeordnet ist, außerhalb der Bandtransportebene 33 (Stellung Fig. 1 und 3). Der Magnetkopf ist in Fig. 1 geschnitten dargestellt, um deutlich zu machen, daß eine Bandführung in Form von zwei Führungsgabelzinken 59 an beiden Seiten des Magnetkopfes 57 angeordnet ist.

Fig. 2 bis 5 zeigen anhand der Schnittansicht II-II in Fig. 1 einen Ausschnitt aus der Meßkassette, in der nur der Magnetkopf 57 mit seinen Führungsgabelzinken 59 sowie der Stellmechanismus 31 dargestellt sind. Der Magnetkopf 57 mit seinen Gabelzinken 59 ist in Fig. 3 noch außerhalb des Stellmechanismus 33 dargestellt. Nun soll er mittels der Kopfplatte in die Kassette und damit in Spielposition gefahren werden. Die Stellstange 35 wird dazu zunächst in Richtung auf den Elektromagneten 37 in Richtung des Pfeiles 39 verschoben. Damit hat sich die Klinke 45 zusammen mit dem freien Ende der Zunge 21 so eingestellt, daß Klinke und Zunge zwischen die Gabelzinken 59 auf eine Seite der Bandtransportebene 33 fahren konnten. Nun fährt der Tonkopf 57 nach vorn in die Spielposition, und der Klinkenarm gelangt zwischen die Gebelzinken (Fig. 4). Die Messung, ob die Gabelzinken 59 das Band 61 gut führen, wird nun dadurch herbeigeführt, daß der Elektromagnet 37 entlastet wird. Die Feder 41 zieht die Stellstange 35 in Richtung auf den Magnetkopf, und die Klinke 45 legt sich mit der Tastspitze 54 gegen den einen Gabelzinken 59 (Fig. 5). Die Zunge 21 folgt federnd dem zweiten Klinkenarm 49 und gibt über elektrische Anschlußleitungen 65 ein Signal über die Stellung des Magnetkopfes 57 an eine nicht dargestellte Anzeigevorrichtung. Die Anzeigevorrichtung zeigt dabei an, ob die Stellung des Magnetkopfes 57 an der Kopfplatte korrekt ist.

Ist die Kassette eingeschoben und der Magnetkopf 57 in die Spielposition vorgefahren, wie sie aus Fig. 2, 4 und 5 zu ersehen ist, dann hat sich der Fühler 15 gegen die Kopffläche 67 des Magnetkopfes 57 geschoben, wobei der Magnetkopf 57 den Fühler 15 gegebenenfalls zurückgeschoben hat. Diese Verschiebungen werden über elektrische Anschlußleitungen 69 ebenfalls an das nicht dargestellte Anzeigeinstrument übertragen, da die Dehnungsmeßstreifen 17, 17a, 19, 19a die Verstellung der Zunge 11 anzeigen. An dem Meßgerät ist dann ablesbar, ob die Stellung des Magnetkopfes 57 an der Kopfplatte gegenüber der Ebene 33 korrekt ist oder noch irgendwelche Veränderungen nötig hat.

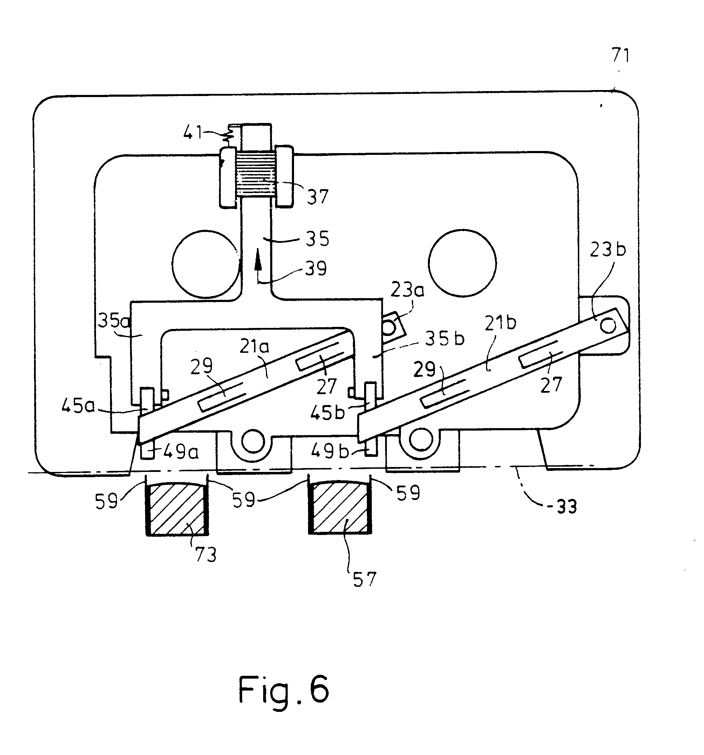

Fig. 6 zeigt einen etwas abgewandelten Rahmen 71 einer Meßkassette nach der Erfindung. In diesem Fall ist die Meßkassette derart ausgebildet, daß in einem Arbeitsgang sowohl der Tonkopf 57 als auch ein an der Kopfplatte angeordneter Löschkopf 73 gemessen werden können. Die Stellstange 35 ist wieder mit Hilfe des Elektromagneten 37 entgegen der Wirkung einer Zugfeder 41 in Richtung des Pfeiles 39 verschiebbar.

Um nun mittels der Stellstange 35 beide Magnetköpfe 57 und 73 messen zu können, ist sie ein Stück außerhalb des Verschiebebereichs im Elektromagneten 57 in zwei Stangenarme 35a und 35b aufgespalten. Die Stangenarme 35a und 35b arbeiten ebenso wie die ungespaltene Stellstange 35 in Fig. 1 mit Klinken 45a und 45b zusammen. Gegen die Klinken drücken Zungen 21a und 21b, die an den einen Enden 23a und 23b an der Meßkassette befestigt und mit ihren anderen Enden frei beweglich sind. Auf den Zungen 21a und 21b sind wieder Dehnungsmeßstreifen entweder einseitig oder beidseitig befestigt, und die Meßergebnisse dieser Dehnungsmeßstreifen können über nicht dargestellte elektrische Verbindungen auf ein nicht dargestelltes Anzeigeinstrument übertragen werden.

Beim Anziehen der Stellstange 35 mittels des Elektromagneten 37 in Richtung des Pfeils 39 werden die Klinken 45a und 45b so verschwenkt, daß sowohl die Klinke mit ihren zweiten Klinkenarmen 49a, 49b (Fig. 2, 4 und 5) als auch die freien Enden der federnden Zungen 21a und 21b zwischen zwei einander gegenüberliegenden Gabelzinken 59 gelangen, ohne daran anzustoßen, wenn die Magnetköpfe 57 eingefahren werden. Durch Entregen des Elektromagneten 37 nach dem Einfahren der Kopfplatte mit den Köpfen 57 und 73 in die Spielposition zieht die Zugfeder 41 die Stellstange 35 in Richtung auf die Magnetköpfe 57, 73, und die zweiten Klinkenarme 49a und 49b senken sich ab auf die Gabelzinken 59. Die den zweiten Klinkenarmen 49a und 49b folgenden federnden Zungen 21a und 21b verbiegen sich dabei derart, daß die Dehnungsmeßstreifen auf ihnen eine Lagenänderung feststellen und diese in Form von elektrischen Signalen an die nicht dargestellte Anzeigevorrichtung übertragen.

## Patentansprüche

1. Meßkassette mit elektrischer Meßwertübertragung zur Messung der Stellung wenigstens eines Magnetkopfes in einem Magnetbandkassettengerät gegenüber der Magnetbandtransportbahn, an der das Magnetband bei Spielbetrieb vor dem Magnetkopf vorbeigeführt wird, gekennzeichnet durch wenigstens eine einseitig befestigte, federnde Zunge (11, 21, 21a, 21b), mit deren freiem Ende die Stellung des Magnetkopfes (57, 73) in der Bandtransportebene (33) und/oder senkrecht dazu bei eingeschobener Kassette abtastbar und die an wenigstens einer Oberfläche mit einer elektrischen Dehnungsmeßanordnung (17a, 17b, 19a, 19b, 27, 29) versehen ist, die von ihr ermittelte Meßwerte über elektrische Übertragungsleitungen an ein Anzeigegerät übermittelt.

2. Meßkassette nach Anspruch 1, dadurch gekennzeichnet, daß am freien Ende der federnden Zunge (11) ein Meßfühler angeordnet ist, der von der Kopffläche des Magnetkopfes (57) mit der Zunge (11) senkrecht zu der Magnetbandtransportebene (33) verschiebbar ist.

3. Meßkassette nach Anspruch 1, dadurch gekennzeichnet, daß das freie Ende der federnden Zunge (21, 21a, 21b) zwischen den Meßvorgängen mittels eines Stellmechanismus (31) in eine berührungslose Mittelstellung zwischen Gabelzinken (59) der zugehörigen Bandführungsgabel des Magnethopfes stellbar ist, in der die Zunge (21, 21a, 21b) frei zwischen die Gabelzinken (59) fahrbar ist.

4. Meßkassette nach den Ansprüchen 1 und 3, dadurch gekennzeichnet, daß der Stellmechanismus (37) aus einer senkrecht zur Bandtransportebene (33) in der Meßkassette verschieblichen Stange (35) besteht, die mittels eines Elektromagneten (37) gegen die Kraft einer Feder (41) zurückziehbar ist und dabei eine Klinke (45, 45a, 45b) betätigt, die sich während einer Messung an eine Gabelzinke (59) anlegt und zwischen den Messungen von der Gabelzinke (59) weg in den Freiraum zwischen beiden Gabelzinken (59) eingeschwenkt ist, wobei die Zunge (21, 21a, 21b) federnd gegen die Klinke (45, 45a, 45b) drückend angeordnet ist und mit der Klinke absenkt und anhebt.

5. Meßkassette nach Anspruch 4, dadurch gekennzeichnet, daß zwei einen Winkel einschließende, miteinander verbundene Klinkenarme (47, 49) vorgesehen sind, die um eine ortsfeste Schwenkachse (51) verschwenkbar sind, und daß der erste Klinkenarm (47) gelenkig an die Stange (35) angelenkt ist.

## Claims

1. A measuring cassette with electrical measurement-value transmission, for measuring the position of at least one magnetic head in a magnetic-tape-cassette apparatus with respect to the magnetic-tape transport path along which the magnetic tape is passed in front of the headface of the magnetic head during play operation, characterized by at least one resilient tongue (11, 21, 21a, 21b) connected to the cassette at one end portion, the free end of the tongue being capable of scanning the position of the magnetic head (57, 73) in the plane (33) of tape transport and/or at right angles to it while the cassette is in the inserted position, and which tongue on at least one surface is provided with an electrical strain-gauge arrangement (17a, 17b, 19a, 19b, 27, 29) which conveys measured values determined by it to an indicating instrument via electrical transmission leads.

2. A measuring cassette as claimed in claim 1, characterized in that at the free end of the resilient tongue (11) a sensor is arranged which is movable from the head-face of the magnetic head (57) with the tongue (11) at right angles to the plane (33) of tape transport.

3. A measuring cassette as claimed in claim 1, characterized in that between measuring operations the free end of the resilient tongue (21, 21a, 21b) is adjustable by means of an adjustment mechanism (31) to a contact-free central position between fork prongs (59) of the associated tape guide fork of the magnetic head, in which central position the tongue (21, 21a, 21b) can travel freely between the fork prongs (59).

4. A measuring cassette as claimed in claims 1 and 3, characterized in that the adjustment mechanism (37) comprises a rod (35) which is movable inside the measuring cassette at right angles to the tape transport plane (33), the rod being retractable by means of an electromagnet (37) against the force of a spring (41) in order to actuate a catch (45, 45a, 45b) which, during a measurement, is positioned against a fork prong (59) and, between measurements, pivots away from the prong (59) into the free space between the two prongs (59), the tongue (21, 21a, 21b) being arranged to act resiliently against the catch (45, 45a, 45b) and is lowered and raised with the catch.

5. A measuring cassette as claimed in claim 4, characterized in that the catch comprises two arms (47, 49) which are interconnected and form an angle with one another, which arms are pivotable about a fixed pivot (51), and in that the first arm (47) of the catch is articulated to the rod (35).

## Revendications

1. Cassette de mesure à transmission électrique des valeurs mesurées pour la mesure de la position d'au moins une tête magnétique dans un appareil à cassette de bande magnétique par rapport au trajet de transport de la bande magnétique, suivant lequel la bande magnétique défile devant la tête magnétique en mode de lecture, caractérisée par au moins une languette élastique (11, 21, 21a, 21b) fixée d'un côté, par l'extrémité libre de laquelle la position de la tête magnétique (57, 73) peut être détectée dans le plan du transport de bande (33) et/ou perpendiculairement à celui-ci, lorsque la cassette est introduite, et qui est pourvue, sur au moins une surface, d'un dispositif électrique de mesure de dilatation (17a, 17b, 19a, 19b, 27, 29) qui transmet les valeurs de mesure qu'il a déterminées par l'intermédiaire de lignes de transfert électriques à un appareil d'affichage.

2. Cassette de mesure suivant la revendication 1, caractérisée en ce que sur l'extrémité libre de la languette élastique (11) est monté un palpeur de mesure qui peut être déplacé par la surface de tête de la tête magnétique (57) avec la languette (11) perpendiculairement au plan du transport (33) de bande magnétique.

3. Cassette de mesure suivant la revendication 1, caractérisée en ce que l'extrémité libre des languettes élastiques (21, 21a, 21b) peut être positionnée, entre les opérations de mesure, au moyen d'un mécanisme de positionnement (31), dans une position médiane sans contact entre les fourchons (59) de la fourche de guidage de bande associée de la tête magnétique, dans laquelle les languettes (21, 21a, 21b) peuvent passer librement entre les fourchons (59).

4. Cassette de mesure suivant les revendications 1 et 2, caractérisée en ce que le mécanisme de positionnement (37) est formé d'une tige (35) mobile dans la cassette de mesure perpendiculairement au plan de transport de bande (33), qui peut être rétractée au moyen d'un électroaimant (37) à l'encontre de la sollicitation d'un ressort (41) et peut ainsi actionner un cliquet (45, 45a, 45b) qui, pendant une mesure, s'applique contre un fourchon (59) et, entre les mesures, pivote à l'écart du fourchon (59), dans l'espace libre entre les deux fourchons (59), la languette (21, 21a, 21b) étant montée de manière à presser élastiquement contre le cliquet (45, 45a, 45b) et à descendre et monter avec ce cliquet.

5. Cassette de mesure suivant la revendication 4, caractérisée en ce que sont prévus deux bras de cliquet (47, 49) formant un angle l'un avec l'autre qui peuvent pivoter autour d'un axe de pivotement fixe (51) et que le premier bras de cliquet (47) est articulé à la tige (35).

Fig.1

Fig.2

Fig.3

Fig.4

Fig.5

Fig.6